# EUROPÄISCHE PATENTSCHRIFT

(11) **EP 3 286 272 B1**
(45) Veröffentlichungstag und Bekanntmachung des Hinweises auf die Patenterteilung: **10.03.2021**
(21) Anmeldenummer: 16727616.1
(22) Anmeldetag: 20.04.2016
(51) Int. Cl.: C09D 135/02, C08F 222/14, C09D 4/06

(54) **BESCHICHTUNGSSYSTEME, DEREN VERWENDUNG ZUR BESCHICHTUNG VON BAUTEILEN SOWIE DAMIT BESCHICHTETE BAUTEILE FÜR LAND- UND BAUMASCHINEN**
COATING SYSTEMS, USE THEREOF FOR COATING COMPONENTS AND THUS COATED COMPONENTS FOR AGRICULTURAL AND CONSTRUCTION MACHINES
SYSTÈME DE REVÊTEMENT, SON UTILISATION POUR REVÊTIR DES PIÈCES ET PIÈCES AINSI REVÊTUES POUR DES MACHINES AGRICOLES ET DES ENGINS DE CHANTIER

(30) Priorität: 20.04.2015 DE 102015105983
(43) Veröffentlichungstag der Anmeldung: 28.02.2018
(73) Patentinhaber: Mankiewicz Gebr. & Co. GmbH & Co. KG, 21107 Hamburg (DE)
(72) Erfinder: WEHNER, Jochen, 21075 Hamburg (DE); COSTA, Andrea, 21129 Hamburg (DE)
(86) Internationale Anmeldenummer: PCT/DE2016/000165
(87) Internationale Veröffentlichungsnummer: WO 2016/169544

(56) Entgegenhaltungen:
- EP-A1- 0 326 723
- EP-A1- 1 245 590
- EP-A1- 2 374 836
- WO-A1-2013/050574
- WO-A1-2013/050623

## Beschreibung

Die vorliegende Erfindung betrifft verbesserte Beschichtungsstoffe auf der Basis von RMA-Systemen, welche mit Hilfe einer klassischen Michael-Addition vernetzen. Die Erfindung betrifft auch die daraus herstellbaren Beschichtungen sowie beschichtete Bauteile, insbesondere Bauteile für Landmaschinen und Baumaschinen wie beispielsweise Teile von Karosserien, Werkzeugen oder Anbaugeräten.

Beschichtungsstoffe, die in einer Michael-Additionsreaktion vernetzen, sind bekannt. Die daraus hergestellten Beschichtungen weisen hohe Bewitterungsstabilitäten und chemische Beständigkeiten auf. Die schnelle Aushärtung dieser Beschichtungsstoffe wird durch den Einsatz hoher Katalysatorgehalte erreicht, wobei jedoch die Verarbeitungszeit oder Topfzeit des Beschichtungsstoffs stark verkürzt wird.

Eine schnelle Aushärtung ist vor allem bei der Beschichtung oder Lackierung von großen Bauteilen wie zum Beispiel bei Karosserieteilen besonders vorteilhaft. Doch durch die Größe und Form der Flächen wird zur Beschichtung des gesamten Bauteils relativ viel Zeit benötigt, so dass die eingesetzten Beschichtungsstoffe lange Topfzeiten und lange Offenzeiten aufweisen müssen. Als Topfzeit wird im Folgenden die Zeitspanne zwischen dem Vermischen aller Komponenten eines Beschichtungsstoffs und dem Zeitpunkt, an dem die Vernetzungsreaktion im Beschichtungsstoff soweit fortgeschritten ist, dass der Beschichtungsstoff nicht mehr verarbeitet werden kann, bezeichnet. Als Offenzeit wird im Folgenden die Zeitspanne bezeichnet, in der ein auf eine Oberfläche applizierter Beschichtungsstoff-Film noch ohne Beeinträchtigung der Verlaufseigenschaften korrigiert werden kann.

Während der Applikation des Beschichtungsstoffs müssen die bereits beschichteten Flächen zusätzlich den Overspray, der bei der Lackierung der angrenzenden Flächen entsteht, aufnehmen können, ohne dass es zu Oberflächenstörungen beispielsweise durch einen schlechten Verlauf kommt. Als Overspray wird im Folgenden der beim Spritzlackieren verursachte Materialverlust des Beschichtungsstoffs bezeichnet. Der Materialverlust kann verursacht werden durch Vorbeispritzen aufgrund ungünstiger Orientierung der Spritzpistole zum Werkstück oder bei stark durchbrochenen Werkstücken wie Gittern. Overspray kann auch durch seitlich von den Werkstückoberflächen abströmende Beschichtungsstoff-Tröpfchen auftreten. Overspray-Aufnahme ist dabei die Eigenschaft eines applizierten Beschichtungsstoffs, Material aus einem Overspray so aufzunehmen, dass die gewünschte glatte Oberfläche des Films oder der Schicht erhalten bleibt.

Nach der Applikation des Beschichtungsstoff-Films oder der Beschichtungsstoff-Schicht ist eine möglichst schnelle Trocknung oder Aushärtung zur Beschichtung gewünscht. Eine forcierte Trocknung bei erhöhter Temperatur ist bei großen Bauteilen in der Regel nicht möglich, da hierzu entsprechend große Öfen erforderlich wären. Deshalb ist vor allem bei der Beschichtung oder Lackierung von sehr großen Bauteilen eine bei Raumtemperatur schnelle Trocknung besonders wünschenswert.

WO 2013/050623 offenbart eine vernetzbare Zusammensetzung, enthaltend eine Komponente mit mindestens zwei CH-aciden Protonen in aktivierten Methylen- oder Methingruppen, eine Komponente mit mindestens zwei aktivierten ungesättigten Gruppen und ein Katalysatorsystem, das einen basischen Michael-Additionskatalysator enthält oder generiert.

Aus EP 2374836 A1 sind in einer Michael-Addition vernetzende Bindemittelsysteme, im Folgenden als RMA-Systeme bezeichnet, bekannt, die ein günstiges Verhältnis von Topfzeit zu Trocknungszeit haben. Die beschriebenen Bindemittelsysteme zeigen bei langen Topfzeiten auch bei Raumtemperatur kurze Trocknungszeiten. Auf EP 2374836 A1 wird hiermit ausdrücklich als Bestandteil der Beschreibung Bezug genommen. Nachteil der bekannten RMA-Systeme ist, dass die daraus hergestellten Beschichtungsstoffe und Beschichtungen nicht die erforderlichen und üblichen Eigenschaften zeigen.

Es ist daher Aufgabe der vorliegenden Erfindung verbesserte Beschichtungsstoffe, Beschichtungen und Beschichtungssysteme auf Basis vom RMA-Systemen zur Verfügung zu stellen, die insbesondere zum Beschichten großer Bauteile wie Karosserieteile und Werkzeuge von Bau- und Landmaschinen geeignet sind.

Diese Aufgabe wird gelöst durch Beschichtungsstoffe zur Herstellung einer Beschichtung gemäß Hauptanspruch.

Weitere Ausführungsformen werden in den Neben- und Unteransprüchen sowie der Beschreibung offenbart.

Die erfindungsgemäßen Beschichtungsstoffe umfassen ein RMA-System, welches ein oder mehrere CH-acide Verbindungen A, ein oder mehrere vinyloge Carbonylverbindungen B und ein oder mehrere Katalysatoren C aufweist. Zusätzlich enthalten sie zumindest ein oder mehrere Lichtschutzmittel, ein oder mehrere Topfzeit-Verlängerer, ein oder mehrere Offenzeit-Verlängerer, ein oder mehrere anorganische und/oder organische Pigmente sowie ein oder mehrere Korrosionsschutzmittel.

Im Folgenden werden unter dem Begriff Lichtschutzmittel Additive und Hilfsstoffe verstanden, die Beschichtungen gegen den Einfluss von UV-Licht schützen, insbesondere einen durch UV-Strahlung verursachten Polymerabbau verhindern oder zumindest deutlich verzögern. Unter dem Begriff Topfzeit-Verlängerer werden Additive und Hilfsstoffe verstanden, die als Bestandteil des verarbeitungsfertig angemischten Beschichtungsstoffs die Aushärtung des Beschichtungsstoffs vor der Applikation verzögern. Sie verdampfen während der Applikation, so dass die Härtung des applizierten Beschichtungsstoffs nicht beeinträchtigt, insbesondere nicht verlängert, wird. Unter dem Begriff Offenzeit-Verlängerer werden Additive und Hilfsstoffe verstanden, die auch nach der Applikation im Beschichtungsstoff verbleiben und dessen Aushärtung zur Beschichtung verzögern. Unter dem Begriff Korrosionsschutzmittel werden Additive und Hilfsstoffe verstanden, welche an der Grenzfläche von Metallsubstrat und Beschichtung die Korrosion des Metalls verhindern oder zumindest verzögern.

Die erfindungsgemäßen Beschichtungsstoffe enthalten zumindest
- 10 bis 70, bevorzugt 15 bis 60, besonders bevorzugt 20 bis 55 Gew.-%, ein oder mehrere CH-acide Verbindungen A der Formel 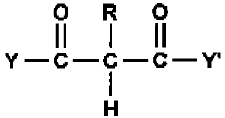 wobei
   - R: Wasserstoff, ein Alkyl- oder Arylrest,
   - Y: ein Alkyl-, Aralkyl-, Aryl-, Alkoxy-Rest oder eine Aminogruppe und,
   - Y': ein Alkyl-, Aralkyl-, Aryl-, Alkoxy-Rest oder eine Aminogruppe ist,
- 4 bis 40, bevorzugt 8 bis 35, besonders bevorzugt 10 bis 30 Gew.-%, ein oder mehrere vinyloge Carbonylverbindungen B ausgewählt aus Acrylaten und/oder Maleaten,
- 0,1 bis 15, bevorzugt 0,2 bis 10, besonders bevorzugt 0,3 bis 5 Gew.-%, ein oder mehrere latente Basen als Katalysatoren C,
- 0,00001 bis 10, bevorzugt 0,5 bis 5, besonders bevorzugt 1 bis 3 Gew.-%, ein oder mehrere Lichtschutzmittel, welche ausgewählt sind aus der Gruppe enthaltend Radikalfänger, UV-Absorber, Quencher und Peroxidzersetzer,
- 0,00001 bis 20, bevorzugt 0,01 bis 10, besonders bevorzugt 0,1 bis 5 Gew.-%, ein oder mehrere Offenzeit-Verlängerer, welche ausgewählt sind aus der Gruppe enthaltend basische NH-funktionelle Verbindungen mit pKₐ-Wert zwischen 4 und 14,
- 0,00001 bis 20, bevorzugt 0,01 bis 15, besonders bevorzugt 0,1 bis 10 Gew.-%, ein oder mehrere Topfzeit-Verlängerer, welche ausgewählt sind aus der Gruppe enthaltend Alkohole mit bis zu 6 Kohlenstoffatomen und Verdunstungszahlen unter 35,
- 0,1 bis zu 65, bevorzugt 5 bis 55, besonders bevorzugt 8 bis 40 Gew.-%, ein oder mehrere anorganische und/oder organische Pigmente und
- 0,1 bis zu 40, bevorzugt 1 bis 35, besonders bevorzugt 3 bis 30 Gew.-%, ein oder mehrere Korrosionsschutzmittel, welche ausgewählt sind aus der Gruppe enthaltend Tannin-Derivate, basische Sulfonate, Nitrocarboxylate, Zinksalze organischer Stickstoffsäuren, Korrosionsschutz-Pigmente und aktive Pigmente, wobei sich die Mengenangaben jeweils auf die Gesamtmenge des Beschichtungsstoffs beziehen.

Erfindungsgemäß werden die Verbindungen A und B in einem Stoffmengenverhältnis A:B von 0,5:1 bis 2:1, bevorzugt von 0,75:1 bis 1,6:1, besonders bevorzugt von 0,9:1 bis 1,3:1, ganz besonders bevorzugt von 0,95:1 bis 1,1:1 eingesetzt, wobei die Stoffmengen auf die aciden Protonen der Verbindungen A und auf die vinylogen Carbonylgruppen der Verbindungen B bezogen sind.

Erfindungsgemäß werden die Katalysatoren C und Verbindungen A in einem Stoffmengenverhältnis C:A von 0,8:1 bis 2,5:1, bevorzugt 1,1:1 bis 1,9:1, besonders bevorzugt 1,3:1 bis 1,7:1 eingesetzt, wobei die Stoffmengen auf das Kation X⁺ des Katalysators C und die aciden Protonen der Verbindungen A bezogen sind.

Erfindungsgemäß geeignete CH-acide Verbindungen A sind Malonsäureester, Acetessigsäureester oder deren Gemische. Bevorzugt sind Malonsäureester mit oligomeren und polymeren Substituenten beispielsweise auf der Basis von Polyestern, Polyurethanen, Polyacrylaten, Epoxidharzen, Polyamiden oder Polycarbonaten. Besonders bevorzugt sind Malonsäureester mit oligomeren und polymeren Substituenten auf Basis von Polyestern, Polyurethanen und/oder Polycarbonaten. Die eingesetzten Acetessigsäureester enthalten bevorzugt oligomere und polymere Substituenten beispielsweise auf der Basis von Polyalkoholen, Polyvinylalkoholen, Epoxidharzen, hydroxyfunktionellen Polyethern, Polyestern oder Polyacrylaten. Besonders bevorzugt sind Acetessigsäureester mit oligomeren und polymeren Substituenten auf Basis von Polyestern und/oder Polyacrylaten. Ganz besonders bevorzugt sind Verbindungen ausgewählt aus der Gruppe enthaltend Malonsäureester mit oligomeren und polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden.

Erfindungsgemäß geeignete vinyloge Carbonylverbindungen B sind beispielsweise ungesättigte acryloyl-funktionale Acrylate und/oder Maleate. Erfindungsgemäß bevorzugt sind Acrylester aus Verbindungen enthaltend 1 bis 20 Kohlenstoffatome und zumindest 2, bevorzugt 2 bis 6, Hydroxylgruppen. Erfindungsgemäß bevorzugt sind weiterhin Polyester aus Maleinsäure, Fumarsäure und/oder Itaconsäure oder deren Anhydride umgesetzt mit di- oder polyvalenten Hydroxylverbindungen, die eine monovalente Hydroxyl- oder Carboxylverbindung enthalten können. Weiterhin bevorzugt sind Harze wie Polyester, Polyurethane, Polyether und/oder Alkydharze, welche entsprechend aktivierte ungesättigte Gruppen enthalten wie beispielsweise Urethanacrylate, Polyetheracrylate, polyfunktionelle Polyacrylate, Polyalkylmaleate und Polyacrylate, die aus der Umsetzung von Acrylsäure mit Epoxidharzen erhalten werden. Erfindungsgemäß besonders bevorzugt sind Butandioldiacrylat, Hexandioldiacrylat, Trimethylolpropantriacrylat, Pentaerythritoltetraacrylat und Ditrimethylolpropantetraacrylat und Dipentaerithritol-hexa-acrylat sowie Dipropylenglykoldiacrylat und Tripropylenglykoldiacrylat.

Geeignete latent-basische Verbindungen für die Katalysatoren C sind beispielsweise substituierte Carbonsäuresalze der Formel II: 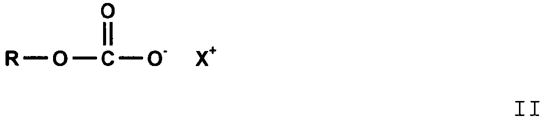 worin
- R: Wasserstoff, Alkyl- oder Aralkyl- (Ar-R) oder ein Polymer ist,
- X⁺: ein Alkali- oder Erdalkalimetall-Kation, insbesondere Lithium, Natrium oder Kalium ist, oder ein quaternäres Ammonium- oder Phosphoniumsalz der Formel (R')₄Y⁺ ist, worin Y
Y Stickstoff oder Phosphor ist,
R' gleich oder verschieden, Wasserstoff, Alkyl-, Aral- oder Aralkyl- oder ein Polymer ist und worin
R und R' eine Ringstruktur bilden können oder
R und R' ein Polymer sein können.

Erfindungsgemäß bevorzugt ist R eine Alkylgruppe oder eine Aralkylgruppe, besonders bevorzugt eine Alkylgruppe mit 1 bis 4 Kohlenstoffatomen. Die Carbonatgruppe und das Kation X⁺ können darüber hinaus auch an einem Molekül mit der entsprechenden Struktur vorhanden sein. Weiterhin bevorzugt ist R' eine Alkylgruppe, besonders bevorzugt eine Alkylgruppe mit 1 bis 4 Kohlenstoffatomen, besonders bevorzugt mit 3 bis 4 Kohlenstoffatomen. Erfindungsgemäß bevorzugt werden Ammonium- und/oder Phosphoniumcarbonate eingesetzt. Geeignete Ammoniumcarbonate sind beispielsweise Tetrahexylammoniummethylcarbonat, Tetrahexylammoniumhydrogencarbonat, Tetradecanyltrihexylammoniummethylcarbonat, Tetradecylammoniummethylcarbonat, Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat, Benzyltrimethylammoniummethylcarbonat, Trihexylmethylammoniummethylcarbonat oder Trioctylmethylammoniummethylcarbonat. Besonders bevorzugt werden Tetrabutylammoniummethylcarbonat, Tetrabutylammoniumethylcarbonat, Tetrabutylammoniumhydrogencarbonat, Tetrapropylammoniummethylcarbonat, Tetrapropylammoniumethylcarbonat, Tetrapropylammoniumhydrogencarbonat und deren Gemische eingesetzt.

Geeignete Lichtschutzmittel sind Radikalfänger wie sterisch gehinderte aliphatische Amine z.B. auf Basis substituierter 2,2,6,6-Tetramethylpiperidine, UV-Absorber wie 2-Hydroxyphenylbenztriazole, 2-Hydroxybenzophenone, 2-Hydroxyphenyltriazine oder Oxalanilide, sowie Quencher wie organische Nickelverbindungen und Peroxidzersetzer wie Thioether oder Phosphite. Bevorzugt eingesetzt werden Radikalfänger beispielsweise sterisch gehinderte aliphatische Amine auf Basis substituierter 2,2,6,6-Tetramethylpiperidine, und/oder UV-Absorber beispielsweise 2-Hydroxyphenylbenztriazole, 2-Hydroxybenzophenone, 2-Hydroxyphenyltriazine und Oxalanilide. Besonders bevorzugt eingesetzt werden substituierte 2,2,6,6-Tetramethylpiperidine, 2-Hydroxyphenyltriazine, 2-Hydroxybenzophenone und deren Gemische.

Geeignete Topfzeit-Verlängerer sind Alkohole mit bis zu 6, bevorzugt bis zu 4, besonders bevorzugt bis zu 3 Kohlenstoffatomen, die eine Verdunstungszahl unter 35, bevorzugt unter 20 aufweisen. So können erfindungsgemäß beispielsweise Methanol, Ethanol, n-Propanol, i-Propanol, n-Butanol, i-Butanol und deren Gemische eingesetzt werden.

Geeignete Offenzeit-Verlängerer sind basische NH-funktionelle Verbindungen mit einem pKₐ-Wert zwischen 4 und 14 auf. Bevorzugt sind Succinimide, 1,2,4,-Triazole, 1,2,3,-Benzotriazole, 5,5-Diphenylhydantoine, Hydantoine, (RS)-3-Ethyl-3-methylpyrrolidin-2,5-dion und deren Gemische. Besonders bevorzugt sind Succinimide, 1,2,4,-Triazole, 1,2,3,-Benzotriazole und deren Gemischen.

Geeignete anorganische Pigmente sind Titandioxid, Eisenoxide, Chromoxide, Chromtitanate, Bismutvanadat, Cobaltblau und Ruße. Bevorzugt eingesetzte anorganische Pigmente sind Titandioxid, Eisenoxide und Ruße. Geeignete organische Pigmente sind Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6, Pigment Green 7. Bevorzugt eingesetzte Pigmente sind Pigment Yellow 151, Pigment Orange 67, Pigment Red 170, Pigment Violet 19, Pigment Blue 15:3, Pigment Green 7.

Geeignete Korrosionsschutzmittel sind Tannin-Derivate, basische Sulfonate, Nitrocarboxylate wie Aminocarboxylat, sowie Zinksalze organischer Stickstoffsäuren wie Zink-Nitroisophthalat oder Zinksalze der Cyanursäure. Weitere geeignete Korrosionsschutzmittel sind Korrosionsschutz-Pigmente wie Eisenglimmer, Aluminium-Pigmente oder Talkum sowie aktive Pigmente, welche eine elektrochemische Passivierung der Metalloberfläche bewirken, wie Phosphate, Borate, Silicate, Molybdate oder Chromate. Erfindungsgemäß bevorzugt sind aktive Pigmente wie Phosphate mit Zink-, Aluminium-, Magnesium-, Zirkonium-und Strontium-Kationen sowie deren Mischformen. Besonders bevorzugt sind Aluminium-Magnesiumphosphate, Aluminium-Zinkphosphate und Aluminium-Strontiumphosphate,

In einer weiteren Ausführungsform der vorliegenden Erfindung können den Beschichtungsstoffen weitere Additive und Hilfsstoffe wie Dispergieradditive, Füllstoffe und/oder Mattierungsmittel zugesetzt werden, um die erforderlichen Eigenschaften des Beschichtungsstoffs und/oder der Beschichtung zu verbessern.

Die erfindungsgemäßen Beschichtungsstoffe können dabei bis zu 25, bevorzugt 0,00001 bis 8, besonders bevorzugt 0,00001 bis 5 Gew.-% Dispergieradditive enthalten, wobei sich die Mengenangaben jeweils auf die Gesamtmenge des Beschichtungsstoffs beziehen. Geeignete Dispergieradditive sind beispielsweise hochmolekulare Blockcopolymere mit pigmentaffinen Gruppen, hochverzweigte Polyester oder Acrylat-Polyester-Copolymere mit pigmentaffinen Gruppen. Bevorzugt eingesetzte Dispergieradditive sind hochmolekulare Blockcopolymere mit pigmentaffinen Gruppen.

Die erfindungsgemäßen Beschichtungsstoffe können weiterhin bis zu 60, bevorzugt 0,00001 bis 40, besonders bevorzugt 10 bis 30 Gew.-% Füllstoffe enthalten, wobei sich die Mengenangaben jeweils auf die Gesamtmenge des Beschichtungsstoffs beziehen. Geeignete Füllstoffe sind beispielsweise Carbonate wie Kreide, Kalksteinmehl, Calcit, gefälltes Calciumcarbonat, Dolomit oder Bariumcarbonat, Sulfate wie Baryt, Bariumsulfat oder Calciumsulfat, Fasern aus Schmelzen von Glas oder Basalten, Glasmehl, Glaskugeln und Schlacken. Bevorzugt eingesetzte Füllstoffe sind Bariumsulfat und/oder Calciumcarbonat.

Die erfindungsgemäßen Beschichtungsstoffe können weiterhin bis zu 30, bevorzugt 0,00001 bis 20, besonders bevorzugt 0,00001 bis 10 Gew.-% Mattierungsmittel enthalten, wobei sich die Mengenangaben jeweils auf die Gesamtmenge des Beschichtungsstoffs beziehen. Unter dem Begriff Mattierungsmittel werden Additive und Hilfsstoffe verstanden, die den Glanz einer Beschichtung vermindern oder einen Mattglanz erzeugen. Mattierungsmittel erzeugen in der Beschichtung die dafür notwendigen Oberflächenstrukturen ohne Beeinträchtigung sonstiger Merkmale und Eigenschaften. Geeignete Mattierungsmittel sind beispielsweise mikronisierte amorphe Kieselsäuren wie Silicagele oder Fällungskieselsäuren, mikronisierte und gefällte Wachse wie Polyethylenwachse, Polypropylenwachse, Polyamidwachse oder PTFE-Wachse, und auch mikronisierte Polymere wie Harnstoffaldehydharze. Bevorzugt eingesetzte Mattierungsmittel sind mikronisierte und gefällte Polyethylenwachse, Polypropylenwachse, Polyamidwachse, PTFE-Wachse sowie mikronisierte Harnstoffaldehydharze.

In weiteren erfindungsgemäßen Ausführungsformen enthalten die Beschichtungsstoffe darüber hinaus bis zu 50, bevorzugt 0,00001 bis 30, besonders bevorzugt 0,00001 bis 20 Gew.-% aprotische Lösemittel, wobei sich die Mengenangaben jeweils auf die Gesamtmenge des Beschichtungsstoffs beziehen. Unter dem Begriff aprotische Lösemittel werden im Folgenden Lösemittel verstanden, die kein ionisierbares Proton im Molekül enthalten. Geeignete aprotische Lösemittel sind beispielsweise aliphatische Kohlenwasserstoffe, cycloaliphatische Kohlenwasserstoffe, aromatische Kohlenwasserstoffe, Ketone, Ester, Ether, Etherester insbesondere Ethylacetat, Butylacetat, Aceton, n-Butanon, Methylisobutylketon, Methoxypropylacetat sowie Dimethylsulfoxid. Bevorzugt eingesetzte Lösungsmittel sind Ethylacetat, Butylacetat, Aceton, n-Butanon, Methylisobutylketon, Methoxypropylacetat und deren Gemische.

Die als erfindungsgemäße Katalysatoren C eingesetzten Verbindungen sind latente Basen, da das Carbonat gemäß Formel II im Gleichgewicht mit seinen Dissoziationsprodukten Kohlendioxid und der entsprechenden Hydroxidoder Alkoxy-Base steht. Solange Kohlenmonoxid aus dem System nicht entweichen kann, liegt das Gleichgewicht auf der Seite des Carbonats. Erst wenn Kohlendioxid entfernt wird und somit eine hinreichende Menge an Base vorliegt, startet die Vernetzung mittels Michael-Addition. Bei einer Lagerung der erfindungsgemäßen Beschichtungsstoffe in geschlossen Behältern, aus denen Kohlendioxid nicht entweichen kann, kann der erfindungsgemäße Beschichtungsstoff grundsätzlich als ein Einkomponentensystem formuliert werden. Die Lagerstabilität kann jedoch erhöht werden, wenn die einzelnen Bestandteile des erfindungsgemäßen Beschichtungsstoffs in Mehrkomponentensystemen formuliert werden. So kann beispielsweise eine Katalysatorkomponente, welche die Katalysatoren C enthält, erst kurz vor der Verarbeitung mit den Bindemittelkomponenten, welche die CH-acide Verbindungen A und die vinylogen Carbonylverbindungen B enthalten, vermischt werden.

Erfindungsgemäß können die CH-acide Verbindungen A und die vinylogen Carbonylverbindungen B zusammen mit den eingesetzten Lichtschutzmitteln, Offenzeit-Verlängerern und Topfzeit-Verlängerern in einer Bindemittelkomponente enthalten sein. Diese Bindemittelkomponente kann weiterhin Pigmente, Füllstoffe, Korrosionsschutzmittel, zusätzliche weitere Additive sowie Lösemittel enthalten. Die Katalysatoren C sowie gegebenenfalls weitere Lösemittel und Topfzeit-Verlängerer können in einer Katalysatorkomponente enthalten sein. In einer bevorzugten Ausführungsform können die CH-acide Verbindungen A in einer ersten Bindemittelkomponente, die vinylogen Carbonylverbindungen B in einer zweiten Bindemittelkomponente und die Katalysatoren C in einer Katalysatorkomponente vorliegen. In einem solchen Dreikomponenten-System sind bevorzugt die CH-aciden Verbindungen A zusammen mit den Offenzeit-Verlängerern und Lichtschutzmitteln in der ersten Bindemittelkomponente enthalten. Gegebenenfalls kann diese erste Bindemittelkomponente weiterhin Pigmente, Füllstoffe und Korrosionsschutzmittel sowie zusätzliche Additive enthalten. In der zweiten Bindemittelkomponente sind bevorzugt die vinylogen Carbonylverbindungen B enthalten. Weiterhin kann auch die zweite Bindemittelkomponente Pigmente, Füllstoffe, Korrosionsschutzmittel und zusätzliche Additive enthalten. In der Katalysatorkomponente sind die Katalysatoren C enthalten. Weiterhin kann die Katalysatorkomponente Lösemittel und Topfzeit-Verlängerer enthalten.

Es ist bekannt, dass die Zugabe weiterer Bestandteile, die zur Herstellung einer Beschichtung üblich sind, die Lagerstabilität der RMA-Systeme verringert. Die erfindungsgemäßen Beschichtungsstoffe mit ihrer besonderen Auswahl an Lichtschutzmitteln, Offenzeit-Verlängern, Topfzeit-Verlängern, Pigmenten, Korrosionsschutzmitteln, Dispergieradditiven, funktionalen Füllstoffen, Mattierungsmitteln und aprotischen Lösemitteln weisen im Vergleich zu bisher bekannten Beschichtungsstoffen auf Basis von RMA-Systemen eine unerwartete hohe Lagerstabilität auf.

Weiterhin werden auch die Eigenschaften von Beschichtungen, welche aus Beschichtungsstoffen auf der Basis von RMA-Systemen hergestellt sind, im Unterschied zu Beschichtungen, welche aus Beschichtungstoffen auf Basis üblicher Bindemitteln wie beispielsweise Epoxidharzen oder Polyurethanen hergestellt sind, stark vom Vorhandensein weiterer Bestandteile des Beschichtungstoffs beeinträchtigt. Es hat sich überraschenderweise gezeigt, dass die erfindungsgmäßen Beschichtungsstoffe Beschichtungen ergeben, welche die für eine Verwendung bei Bauteilen von Bau- und Landmaschinen erforderlichen Eigenschaften aufweisen, insbesondere mechanische Stabilität auch bei hohen Schichtdicken und Korrosionsbeständigkeit.

In einer besonders bevorzugten Ausführungsform enthalten die erfindungsgemäßen Beschichtungsstoffe zumindest
- 10 bis 70, bevorzugt 15 bis 60, besonders bevorzugt 20 bis 55 Gew.-%, Malonsäureester mit oligomeren und polymeren Substituenten auf der Basis von Polyestern, die aus der Umsetzung von zumindest Malonsäure, Malonsäuredimethylester und/oder Malonsäurediethylester mit Hexahydrophthalsäure und/oder deren Anhydrid und Neopentylglycol erhalten werden, sowie Acetessigsäureester mit oligomeren und polymeren Substituenten auf der Basis Polyestern, die aus der Umsetzung von zumindest Acetessigsäure, Acetessigsäuremethylester und/oder Acetessigsäureethylester mit Hexahydrophthalsäure und/oder deren Anhydrid und Neopentylglycol erhalten werden, als CH-acide Verbindungen A,
- 4 bis 40, bevorzugt 8 bis 35, besonders bevorzugt 10 bis 30 Gew.-%, Butandioldiacrylat, Hexandioldiacrylat, Trimethylolpropantriacrylat, Pentaerythritoltetraacrylat, Ditrimethylolpropantetraacrylat und/oder Dipentaerithritolhexaacrylat als vinyloge Carbonylverbindungen B,
- 0,1 bis 15, bevorzugt 0,2 bis 10, besonders bevorzugt 0,3 bis 5 Gew.-%, Tetrabutylammoniummethylcarbonat, Tetrabutylammoniumethylcarbonat, Tetrabutylammoniurnhydrogencarbonat, Tetrapropylammoniummethylcarbonat, Tetrapropylammoniumethylcarbonat, Tetrapropylammoniumhydrogencarbonat oder deren Gemische als Katalysatoren C,
- 0,00001 bis 10, bevorzugt 0,5 bis 5, besonders bevorzugt 1 bis 3 Gew.-%, substituierte 2,2,6,6-Tetramethylpiperidine, 2-Hydroxyphenyltriazine, 2-Hydroxybenzophenone oder deren Gemische als Lichtschutzmittel,
- 0,00001 bis 20, bevorzugt 0,01 bis 10, besonders bevorzugt 0,1 bis 5 Gew.-%, Succinimide, 1,2,4,-Triazole, 1,2,3,-Benzotriazole oder deren Gemische als Offenzeit-Verlängerer,
- 0,00001 bis 20, bevorzugt 0,01 bis 15, besonders bevorzugt 0,1 bis 10 Gew.-%, Methanol, Ethanol, n-Propanol, i-Propanol, n-Butanol, i-Butanol oder deren Gemische als Topfzeit-Verlängerer,
- 0,00001 bis 70, bevorzugt 0,01 bis 65, besonders bevorzugt 0,1 bis 40 Gew.-%, Titandioxid, Eisenoxide, Ruße, Pigment Yellow 151, Pigment Orange 67, Pigment Red 170, Pigment Violet 19, Pigment Blue 15:3, Pigment Green 7 oder deren Gemische als Pigmente ,
- 0,1 bis 40, bevorzugt 1 bis 35, besonders bevorzugt 3 bis 30 Gew.-%, Aluminium-Magnesiumphosphate, Aluminium-Zinkphosphate und/oder Aluminium-Strontiumphosphate als Korrosionsschutzmittel,
- 0 bis 25, bevorzugt 0,00001 bis 8, besonders bevorzugt 0,00001 bis 5 Gew.-%, hochmolekulare Blockcopolymere mit pigmentaffinen Gruppen als Dispergieradditive,
- 0 bis 25, bevorzugt 0,00001 bis 15, besonders bevorzugt 0,5 bis 10, ganz besonders bevorzugt 8 bis 15 Gew.-%, mikronisierte und gefällte Polyethylenwachse, Polypropylenwachse, Polyamidwachse, PTFE-Wachse sowie mikronisierte Harnstoffaldehydharze oder deren Gemische als Mattierungsmittel,
- 0 bis 60, bevorzugt 0,00001 bis 40, besonders bevorzugt 0,00001 bis 30 Gew.-%, Bariumsulfat und/oder Calciumcarbonat als funktionale Füllstoffe, und
- 0 bis 50, bevorzugt 0,00001 bis 40, besonders bevorzugt 0,00001 bis 30 Gew.-%, Ethylacetat, Butylacetat, Aceton, n-Butanon, Methylisobutylketon, Methoxypropylacetat oder deren Gemische als aprotische Lösemittel,
   wobei sich die Mengenangaben jeweils auf die Gesamtmenge des Beschichtungsstoffs beziehen.

Die erfindungsgemäßen Beschichtungsstoffe und Beschichtungen weisen gegenüber den bisher bekannten RMA-Beschichtungsstoffen und RMA-Beschichtungen überraschenderweise eine deutlich höhere Lagerstabilität auf. Auch zeigen sie ein verbessertes Trockungsverhalten. Die aus den erfindungsgemäßen Beschichtungsstoffen erhaltenen Beschichtungen weisen darüber hinaus eine verbesserte Lichtstabilität auf, insbesondere weniger Vergilbung und höhere Glanzhaltung.

Die erfindungsgemäßen Beschichtungsstoffe weisen Topfzeiten größer gleich 1 Stunde, bevorzugt größer gleich 2 Stunden, besonders bevorzugt zwischen 2 und 4 Stunden auf. Üblicherweise wird die Topfzeit über die Auslaufzeit aus einem Auslaufbecher bestimmt. Das Ende der Topfzeit ist festgelegt, als der Zeitpunkt in dem die Auslaufzeit den doppelten Wert der Start-Auslaufzeit zeigt. Die Prüfmethode wird unten in den Beispiele ausführlich beschrieben. Weiterhin zeigen die erfindungsgemäßen Beschichtungsstoffe Offenzeiten von größer gleich, 15 Minuten, bevorzugt größer 20 Minuten, besonders bevorzugt größer gleich 25 Minuten. Neben den langen Topf- und Offenzeiten zeigen die erfindungsgemäßen Beschichtungsstoffe überraschenderweise ein ungewöhnlich breites Klimafenster, in dem sie ohne Beeinträchtigung verarbeitet werden können. Sie sind beispielsweise bei Temperaturen bis zu 45 °C und bei relativer Luftfeuchte bis zu 99 % verarbeitbar. Darüber hinaus zeigen sie eine lange Overspray-Aufnahme, beispielsweise über einen Zeitraum von mehr als 25 Minuten.

Im Unterschied zu üblicherweise eingesetzten Beschichtungsstoffen auf Polyurethan-Basis weisen die erfindungsgemäßen Beschichtungsstoffe deutlich verkürzte Trocknungszeiten auf. In einer bevorzugten Ausführungsform werden die erfindungsgemäßen Beschichtungsstoffe zur Herstellung einer Beschichtung auf Substraten wie beispielsweise Metallen, Kunststoffen oder Faserverbundwerkstoffen eingesetzt. Besonders geeignet sind Metalle wie beispielsweise Stähle und Eisenlegierungen, Aluminium und Aluminiumlegierungen. Die zu beschichtenden Bauteiloberflächen können mit einer Grundierung versehen sein wie beispielsweise die üblichen, dem Fachmann bekannten Grundierungen auf Basis von Epoxid-Harzen oder Polyurethanen. Weiterhin können sie wie üblich und dem Fachmann geläufig vorbehandelt sein. Bevorzugte Vorbehandlungen sind Eisenphosphatierung, Zinkphosphatierung, Konversionsschichten auf Basis von Mangan-, Zirkon- und Siliziumverbindungen, Sandstrahlen, Verzinken oder Elektrotauchgrundieren. Besonders bevorzugte Vorbehandlungen sind Konversionsschichten auf Basis von Mangan-, Zirkon- und Siliziumverbindungen. Die erfindungsgemäßen Beschichtungen zeigen auch auf vorbehandelten Substraten eine gute Haftung. Sie weisen darüber hinaus eine hohe Korrosionsschutzwirkung auf.

Die erfindungsgemäßen Beschichtungen zeigen auch bei hohen Schichtdicken optisch einwandfreie Oberflächen. Sie können Trockenschichtdicken zwischen von 80 bis 150 µm aufweisen. Die Applikation der erfindungsgemäßen Beschichtungsstoffe kann innerhalb eines großen Schichtdickenintervalls erfolgen, ohne dass die Oberflächenqualität der Beschichtung beeinträchtigt wird. Die erfindungsgemäßen Beschichtungsstoffe und Beschichtungen sind somit unempfindlich gegenüber Überschichtdicken, die während der Applikation z.B. bei ungünstiger Geometrie des Substrats, auftreten können.

Aufgrund ihrer Eigenschaften können die erfindungsgemäßen Beschichtungsstoffe insbesondere zur Herstellung von Einschicht-Lackierungen eingesetzt werden. Sie sind darüber hinaus für eine Verwendung zur Beschichtung großer Bauteile geeignet, insbesondere zur Beschichtung großflächiger Bauteile aus Metall wie sie beispielsweise für Karosserien für Bau- und Landmaschinen verwendet werden.

Die vorliegende Erfindung betrifft auch Verfahren zur Beschichtung von Bauteilen. Die erfindungsgemäßen Verfahren umfassen dabei die Schritte (a) Applizieren des erfindungsgemäßen Beschichtungsstoffs auf der Oberfläche eines Substrats und (b) Aushärten des applizierten Beschichtungsstoffs für 0,5 bis 12, bevorzugt 0,5 bis 6, besonders bevorzugt 0,5 bis 4 Stunden bei Temperaturen zwischen 5 bis 50, bevorzugt 15 bis 40, besonders bevorzugt 20 bis 35 °C.

Die erfindungsgemäßen Beschichtungsstoffe weisen überdurchschnittlich hohe Festkörpergehalte auf und enthalten dementsprechend geringe Anteile an leichtflüchten organischen Substanzen wie beispielsweise Lösemitteln. Der Festkörpergehalt ist definiert als der Massenanteil eines Beschichtungsstoffs, der beim Eindampfen bei 105 °C nach 30 Minuten als Rückstand verbleibt. Im Wesentlichen besteht der Festkörper in der Regel aus Bindemittel, nicht flüchtigen Additiven, Pigmenten und Füllstoffen. Die Festkörpergehalte der erfindungsgemäßen Beschichtungsstoffe liegen zwischen 65 und 95, bevorzugt 70 und 90, besonders bevorzugt zwischen 75 und 85 Gew.-%, bezogen auf das Gesamtgewicht des Beschichtungsstoffs.

Üblicherweise werden bei der Verarbeitung von Beschichtungsstoffen mit hohen Festkörpergehalten mit den üblichen Spritzverfahren raue und matte Oberflächen erhalten. Im Unterschied dazu ergeben die erfindungsgemäßen Beschichtungsstoffe auch bei einer Applikation mittels hydraulischem Höchstdruckspritzen (Airless), Airless-Spritzen mit Luftunterstützung (Airmix) sowie pneumatischen Spritzen oder Druckluftspritzen überraschenderweise Oberflächen mit hoher Güte. Alle Spritzverfahren können dabei auch elektrostatisch unterstützt angewendet werden.

In einer weiteren Ausführungsform des Verfahrens werden alle Komponenten des eingesetzten Beschichtungsstoffs vor der Applikation vermischt. Die Mischung kann dabei manuell oder maschinell erfolgen.

Da die erfindungsgemäßen Beschichtungsstoffe bei Raumtemperatur ausgehärtet werden können, sind sie vor allem zur Beschichtung von großen Bauteilen, wie sie beispielsweise zum Bau von Land- und Baumaschinen verwendet werden, geeignet. Sie können beispielsweise zur Beschichtung von Karosserieteilen, Dächern, Türen, Fahrwerksverkleidungen, Gittermasten, Auslegern, Greifern, Schaufeln, Schneidwerken oder Pflugscharen eingesetzt werden.

### Beispiele

Die Herstellung der Beschichtungsstoffe erfolgt nach den lacktechnischen Standards, welche dem Fachmann bekannt und geläufig sind. Die in den Beispielrezepturen 1 eingesetzte Katalysatorlösung wird hergestellt indem zu einer Lösung von 17,1 g Tetrabutylammoniumhydroxid in 14 g Wasser 42,8 g Diethylcarbonat und 26,1 g i-Propanol gegeben werden.

### Beispielrezeptur 1: Decklack

| **Substanz** | **Menge [Gew.-%]** |
|---|---|
| **Bindemittelkomponente 1** | |
| malonatfunktioneller Polyester mit einer Konzentration an aciden Protonen von 5,66 mol/kg bezogen auf den lösemittelfreien Polyester, 85%ig in Butylacetat | 27 |
| Magnesiumaluminiumpolyphosphat | 5 |
| hochmolekulares Blockcopolymer mit pigmentaffinen Gruppen | 1 |
| Bis(1,2,2,6,6-pentamethyl-4-piperidinyl)-sebacat | 1 |
| Succinimid | 1 |
| Butylacetat | 5 |
| Bariumsulfat | 22 |

| **Bindemittelkomponente 2** | |
|---|---|
| Ditrimethylolpropantetraacrylat | 12 |
| Hexandioldiacrylat | 3 |
| Pigment Yellow 213 | 4 |
| Titandioxid | 10 |
| hochmolekulares Blockcopolymer mit pigmentaffinen Gruppen | 1 |

| **Katalysatorkomponente** | |
|---|---|
| Katalysatorlösung | 3 |
| Ethanol | 2 |
| Methylethylketon | 3 |

Für eine Beurteilung der Lagerstabilität der Beschichtungsstoffe wurden Topfzeit und Trockungszeit der Beispielrezeptur 1 bestimmt. Dabei wurden jeweils Proben nach 1 Tag Lagerung bei 23 °C, nach 28 Tagen Lagerung bei 40 °C und nach 1 Jahr Lagerung bei 20 bis 23 °C geprüft bzw. zur Herstellung einer Beschichtung eingesetzt.

Bestimmung der Topfzeit: Die Topfzeit wird mit Hilfe eines Auslaufbechers bestimmt. Bei diesem Verfahren wird eine Flüssigkeit in einen Becher mit definiertem Volumen gefüllt, der in seinem Boden eine definierte Düse aufweist. Der Beschichtungsstoff läuft durch die Düse aus, wobei die Zeit vom Austritt an bis zum Abriss des Flüssigkeitsstrahls gemessen als Auslaufzeit gemessen wird. Sämtliche Vorbereitung und Messungen werden bei einer Temperatur von 23 °C durchgeführt. Zunächst werden alle Komponenten des Beschichtungsstoffs vermischt und sofort die Auslaufzeit der Mischung gemessen (Start-Auslaufzeit). Die Messung wird in regelmäßigen Zeitabständen wiederholt. Das Ende der Topfzeit ist erreicht, wenn die Auslaufzeit das Doppelte der Start-Auslaufzeit aufweist.

Bestimmung der Trocknungszeit: Zur Bestimmung der Trocknungszeit wird ein Trocknungsrecorder, Trocknungszeitmessgerät der Firma BYK Gardener, eingesetzt. Hierbei wird der zu untersuchende Beschichtungsstoff mit Hilfe eines Filmziehers gleichmäßig auf Glasstreifen appliziert. Die Glasstreifen werden anschließend in einen linearen Recorder gelegt. Dann werden Nadeln auf die Beschichtung aufgesetzt und mit einer definierten, konstanten Geschwindigkeit über den trocknenden Film gezogen. Dabei entsteht ein charakteristisches Trocknungsbild der Beschichtung, in dem die einzelnen Zeitabschnitte die unterschiedlichen Härtungsstadien zeigen: Verlauf oder Offenzeit, Grundspur, Filmaufriss und Oberflächenspur. Die Aushärtung des Beschichtungsstoffs beginnt dabei mit dem Ende der Offenzeit, d.h. in dem Zeitpunkt, an dem die durch die Nadel in den applizierten Film geritzte Spur sichtbar bleibt. Sie endet mit der Oberflächenspur, d.h. in dem Zeitpunkt, an dem die Nadel keine sichtbar Spur mehr im applizierten Film hinterlässt.

Zur Beurteilung Lagerstabilität des Beschichtungsstoffs wurde auch die Qualität der Beschichtungen, die aus unterschiedlich gelagerten Beschichtungsstoffen der Beispielrezeptur 1 hergestellt wurden, untersucht. Hierzu wurden Glanz und Korrosionsbeständigkeit bestimmt. Es wurden jeweils Proben nach 1 Tag Lagerung bei 23 °C, nach 28 Tage Lagerung bei 40 °C und nach 1 Jahr Lagerung bei 20 bis 23 °C zur Herstellung einer Beschichtung eingesetzt. Zur Herstellung der Probekörper wurde Beispielrezeptur 1 auf vorhandelten Stahlplatten mittels Becherpistole appliziert und bei Raumtemperatur ausgehärtet. Zur Vorbehandlung waren die Stahlplatten mit einer Silankonversionsschicht versehen wurden.

Bestimmung des Oberflächenglanzes: Der Glanz der Beschichtungsoberfläche wird als Reflektometerwert bestimmt. Der Reflektometerwert einer Probe ist definiert als das Verhältnis der von der Probenoberfläche und einer Glasoberfläche mit der Brechzahl 1,567 in Spiegelrichtung reflektierten Lichtströme. Die Messwerte werden mit Hilfe eines üblichen Reflektometers im Winkel 60° bestimmt.

Bestimmung der Korrosionsbeständigkeit: Zur Beurteilung der Korrosionsbeständigkeit wurden Salzsprühtests durchgeführt. Dazu wurden die Beschichtungen der Probekörper kreuzförmig bis auf die Metalloberfläche eingeschnitten. Anschließend werden die Probekörper in einer Sprühkammer bei 35±2°C über einen Zeitraum von 500 Stunden einem Salzsprühnebel aus 5%iger Salzlösung mit einem pH-Wert zwischen 6,5 und 7,2 ausgesetzt. Danach werden die Probekörper mit klarem Wasser abgespült und anschließend bei Raumtemperatur 1 Stunde konditioniert. Das Schadensbild der Unterwanderung wird bewertet. Dazu werden an den Einschnitten die losen Teile der Beschichtung vorsichtig entfernt. Es wird jeweils der breiteste Bereich der Enthaftung ermittelt und in Millimetern angegeben.

**Tabelle: Lagerstabilität Beispielrezeptur 1**

| Lagerung | 1 Tag, 23°C | 28 Tage, 40°C | 1 Jahr, 20 - 23 °C |
|---|---|---|---|
| Topfzeit | 3 h | 3h | 3 h |
| Offenzeit | 20 min | 21 min | 22 min |
| Ende Oberflächenspur | 247 min | 238 min | 241 min |
| Glanz | 89 | 90 | 88 |
| Breite der Enthaftung | 0,5 - 2,5 mm | 1 - 2,5 mm | 1 - 2 mm |

Wie die Tabelle zeigt, weisen die erfindungsgemäßen Beschichtungsstoffe eine hohe Lagerstabilitität auf. Nach einer längeren Lagerung bei erhöhter Temperatur zeigen die Beschichtungsstoffe selbst keine Verschlechterung ihrer Verarbeitbarkeit. Auch die daraus hergestellten Beschichtungen zeigen keine Beeinträchtigungen ihrer Eigenschaften.

## Patentansprüche

1. Beschichtungsstoff zur Herstellung einer Beschichtung aufweisend zumindest
- 10 bis 70 Gew.-% ein oder mehrere CH-acide Verbindungen A der Formel 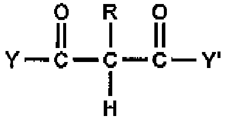 wobei
R Wasserstoff, ein Alkyl- oder Arylrest,
Y ein Alkyl-, Aralkyl-, Aryl-, Alkoxy-Rest oder eine Aminogruppe und,
Y' ein Alkyl-, Aralkyl-, Aryl-, Alkoxy-Rest oder eine Aminogruppe ist,
- 4 bis 40 Gew.-% ein oder mehrere vinyloge Carbonylverbindungen B ausgewählt aus Acrylaten und/oder Maleaten,
- 0,1 bis 15 Gew.-% ein oder mehrere latente Basen als Katalysatoren C,
- 0,00001 bis 10 Gew.-% ein oder mehrere Lichtschutzmittel, welche ausgewählt sind aus der Gruppe enthaltend Radikalfänger, UV-Absorber, Quencher und Peroxidzersetzer,
- 0,00001 bis 20 Gew.-% ein oder mehrere Offenzeit-Verlängerer, welche ausgewählt sind aus der Gruppe enthaltend basische NH-funktionelle Verbindungen mit pKₐ-Wert zwischen 4 und 14,
- 0,00001 bis 20 Gew.-% ein oder mehrere Topfzeit-Verlängerer, welche ausgewählt sind aus der Gruppe enthaltend Alkohole mit bis zu 6 Kohlenstoffatomen und Verdunstungszahlen unter 35,
- 0,00001 bis 70 Gew.-% ein oder mehrere anorganische und/oder organische Pigmente und
- 0,1 bis 40 Gew.-% ein oder mehrere Korrosionsschutzmittel, welche ausgewählt sind aus der Gruppe enthaltend Tannin-Derivate, basische Sulfonate, Nitrocarboxylate, Zinksalze organischer Stickstoffsäuren, Korrosionsschutz-Pigmente und aktive Pigmente,
jeweils bezogen auf die Gesamtmenge des Beschichtungsstoffs.

2. Beschichtungsstoff nach Anspruch 1, **dadurch gekennzeichnet, dass** die Katalysatoren C ein oder mehrere substituierte Carbonsäuresalze der Formel 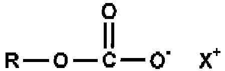 sind, worin
R Wasserstoff, Alkyl- oder Aralkyl- oder ein Polymer-Rest ist,
X⁺ ein Alkali- oder Erdalkalimetall-Kation, ein quaternäres Ammonium- oder Phosphoniumsalz der Formel (R')₄Y⁺ ist, worin
Y Stickstoff oder Phosphor ist,
R' gleich oder verschieden, Wasserstoff, Alkyl-, Aral- oder Aralkyl- oder ein Polymer ist
und worin R und R' eine Ringstruktur bilden oder ein Polymer sind.

3. Beschichtungsstoff nach einem der voranstehenden Ansprüche, **dadurch gekennzeichnet, dass** die Lichtschutzmittel substituierte 2,2,6,6-Tetramethylpiperidine, 2-Hydroxyphenylbenztriazole, 2-Hydroxybenzophenone, 2-Hydroxyphenyltriazine, Oxalanilide, organische Nickelverbindungen, Thioether und/oder Phosphite sind.

4. Beschichtungsstoff nach einem der voranstehenden Ansprüche, **dadurch gekennzeichnet, dass** der Beschichtungsstoff 0,5 bis 5, bevorzugt 1 bis 3 Gew.-% Lichtschutzmittel bezogen auf die Gesamtmenge des Beschichtungsstoffs enthält.

5. Beschichtungsstoff nach einem der voranstehenden Ansprüche, **dadurch gekennzeichnet, dass** die Topfzeit-Verlängerer Alkohole mit bis zu 4 Kohlenstoffatomen sind.

6. Beschichtungsstoff nach einem der voranstehenden Ansprüche, **dadurch gekennzeichnet, dass** der Beschichtungsstoff 0,01 bis 15 Gew.-% Topfzeit-Verlängerer bezogen auf die Gesamtmenge des Beschichtungsstoffs enthält.

7. Beschichtungsstoff nach einem der voranstehenden Ansprüche, **dadurch gekennzeichnet, dass** die Offenzeit-Verlängerer Succinimide, 1,2,4,-Triazole, 1,2,3,-Benzotriazole, 5,5-Diphenylhydantoine, Hydantoine und/oder (RS)-3-Ethyl-3-methylpyrrolidin-2,5-dion sind.

8. Beschichtungsstoff nach einem der voranstehenden Ansprüche, **dadurch gekennzeichnet, dass** der Beschichtungsstoff 0,01 bis 10 Gew.-% Offenzeit-Verlängerer bezogen auf die Gesamtmenge des Beschichtungsstoffs enthält.

9. Beschichtungsstoff nach einem der voranstehenden Ansprüche, **dadurch gekennzeichnet, dass** die Pigmente ausgewählt sind aus der Gruppe enthaltend Titandioxid, Eisenoxide, Chromoxide, Chromtitanate, Bismutvanadat, Cobaltblau, Ruße, Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6 und Pigment Green 7.

10. Beschichtungsstoff nach einem der voranstehenden Ansprüche, **dadurch gekennzeichnet, dass** die Korrosionsschutzmittel Aminocarboxylate, Zink-Nitroisophthalat, Zinksalze der Cyanursäure, Eisenglimmer, Aluminium-Pigmente, Talkum, Phosphate, Borate, Silicate, Molybdate und/oder Chromate sind.

11. Beschichtungsstoff nach einem der voranstehenden Ansprüche, **dadurch gekennzeichnet, dass** der Beschichtungsstoff 1 bis 35 Gew.-% Korrosionsschutzmittel bezogen auf die Gesamtmenge des Beschichtungsstoffs enthält.

12. Beschichtungsstoff nach einem der voranstehen Ansprüche, **dadurch gekennzeichnet, dass** der Beschichtungsstoff weiterhin bis zu 25 Gew.-% ein oder mehrere Dispergieradditive aufweist.

13. Beschichtungsstoff nach einem der voranstehenden Ansprüche, **dadurch gekennzeichnet, dass** der Beschichtungsstoff weiterhin bis zu 60 Gew.-% ein oder mehrere Füllstoffe aufweist.

14. Beschichtungsstoff nach einem der voranstehenden Ansprüche, **dadurch gekennzeichnet, dass** der Beschichtungsstoff weiterhin bis zu 50 Gew.-% ein oder mehrere aprotische Lösemittel aufweist.

15. Beschichtungsstoff nach einem der voranstehenden Ansprüche, **dadurch gekennzeichnet, dass** der Beschichtungsstoff weiterhin bis zu 10 Gew.-% ein oder mehrere Mattierungsmittel enthält.

16. Verwendung des Beschichtungsstoffs nach einem der Ansprüche 1 bis 15 zur Herstellung eines einschichtigen Beschichtungssystems.

17. Verfahren zur Beschichtung eines Bauteils aufweisend die Schritte (a) Applizieren eines Beschichtungsstoffs nach einem der Ansprüche 1 bis 15 auf einem Substrat und (b) Aushärten der applizierten Schicht bei Temperaturen zwischen 5 und 50 °C über einen Zeitraum von 0,5 bis 12 Stunden.

18. Verfahren nach Anspruch 17, **dadurch gekennzeichnet, dass** der Beschichtungsstoff in Schritt (a) mittels hydraulischen oder pneumatischen Spritzverfahren appliziert wird.

19. Verfahren nach einem der Ansprüche 17 oder 18, **dadurch gekennzeichnet, dass** in Schritt (a) der Beschichtungsstoff auf ein vorbehandeltes Substrat appliziert wird.

20. Bauteil beschichtet mit einer Beschichtung hergestellt aus einem Beschichtungsstoff nach einem der Ansprüche 1 bis 15.

21. Bauteil nach Anspruch 17, **dadurch gekennzeichnet, dass** es ein Bauteil einer Bau- oder Landmaschine ist, bevorzugt ein Karosserieteil oder ein Werkzeugteil.

## Claims

1. Coating material for the production of a coating containing at least
- 10 to 70 % by weight of at least one CH-acidic compound A of the formula 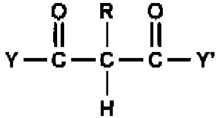 I with
R being hydrogen, an alkyl group or aryl group,
Y being an alkyl group, aralkyl group, aryl group, alkoxy group or an amino group, and with
Y' being an alkyl group, aralkyl group, aryl group, alkoxy group or an amino group,
- 4 to 40 % by weight of at least one vinylogous carbonyl compound B selected from acrylates and/or maleates,
- 0.1 to 15 % by weight of at least one latent base as catalysts C,
- 0.00001 to 10 % by weight of at least one light stabilizer selected from the group comprising free-radical scavengers, UV absorbers, quenching agents and peroxide decomposers,
- 0.00001 to 20 % by weight of at least one open-time extender selected from the group comprising basic NH functional compounds with a pKₐ value of between 4 and 14,
- 0.00001 to 20 % by weight of at least one pot-life extender selected from the group comprising alcohols with up to 6 carbon atoms, and showing an evaporation number of below 35,
- 0.00001 to 70 % by weight of at least one inorganic pigment and/or organic pigment, and
- 0,1 to 40 % by weight of at least one corrosion protection agent selected from the group comprising tannin derivatives, basic sulfonates, nitrocarboxylates, zinc salts of organic nitric acids, anti-corrosive pigments and active pigmets,
each based on the total quantity of the coating material.

2. Coating material as defined in claim 1, **characterized in that** the catalysts C are at least one substituted carboxylic acid salt of the formula 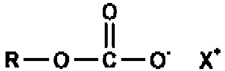 wherein
R is hydrogen, an alkyl group or aralkyl group or a polymer group,
X⁺ is an alkali metal cation, an alkaline earth metal cation or a quaternary ammonium salt or phosphonium salt of the formula (R')₄Y⁺, wherein
Y is nitrogen or phosphorus,
R' is the same or different, is hydrogen, an alkyl group, an aryl group or an aralkyl group or a polymer
and wherein R and R' form a ring structure or are a polymer.

3. Coating material as defined in one of the preceding claims, **characterized in that** the light stabilizers are substituted 2,2,6,6-tetramethylpiperidines, 2-hydroxyphenyl benzotriazoles, 2-hydroxybenzophenones, 2-hydroxyphenyltriazines, oxalanilides, organic nickel compounds, thioethers and/or phosphites.

4. Coating material as defined in one of the preceding claims, **characterized in that** the coating material contains 0.5 to 5 % by weight, preferably 1 to 3 % by weight, of light stabilizers, based on the total quantity of the coating material.

5. Coating material as defined in one of the preceding claims, **characterized in that** the pot-life extenders are alcohols with up to 4 carbon atoms.

6. Coating material as defined in one of the preceding claims, **characterized in that** the coating material contains 0.01 to 15 % by weight of pot-life extenders, based on the total quantity of the coating material.

7. Coating material as defined in one of the preceding claims, **characterized in that** the open-time extenders are succinimides, 1,2,4,-triazoles, 1,2,3,-benzotriazoles, 5,5-diphenylhydantoins, hydantoins and/or (RS)-3-ethyl-3-methylpyrrolidine-2,5-dione.

8. Coating material as defined in one of the preceding claims, **characterized in that** the coating material contains 0.01 to 10 % by weight of open-time extenders, based on the total quantity of the coating material.

9. Coating material as defined in one of the preceding claims, **characterised in that** the pigments are selected from the group comprising titanium dioxide, iron oxides, chromium oxides, chromium titanates, bismuth vanadate, cobalt blue, carbon blacks, pigment yellow 151, pigment yellow 213, pigment yellow 83, pigment orange 67, pigment orange 62, pigment orange 36, pigment red 170, pigment violet 19, pigment violet 23, pigment blue 15:3, pigment blue 15:6 and pigment green 7.

10. Coating material as defined in one of the preceding claims, **characterized in that** the corrosion protection agents are aminocarboxylates, zinc nitroisophthalates, zinc salts of cyanuric acid, micaceous iron ore, aluminium pigments, talc, phosphates, borates, silicates, molybdates and/or chromates.

11. Coating material as defined in one of the preceding claims, **characterized in that** the coating material contains 1 to 35 % by weight of corrosion protection agents based on the total quantity of the coating material.

12. Coating material as defined in one of the preceding claims, **characterized in that** the coating material furthermore contains up to 25 % by weight of at least one dispersing additive.

13. Coating material as defined in one of the preceding claims, **characterized in that** the coating material furthermore contains up to 60 % by weight of at least one filler.

14. Coating material as defined in one of the preceding claims, **characterised in that** the coating material furthermore contains up to 50 % by weight of at least one aprotic solvent.

15. Coating material as defined in one of the preceding claims, **characterized in that** the coating material furthermore contains up to 10 % by weight of at least one matting agent.

16. Use of the coating material as defined in any one of claims 1 to 15 for the production of a single-layer coating system.

17. Method for coating a component, the method comprising the steps a) applying the coating material as defined in any one of claims 1 to 15 to a substrate and (b) curing the applied layer for a duration of 0.5 to 12 hours at a temperature of between 5 and 50 °C.

18. Method as defined in claim 17, **characterized in that** the coating material is applied by means of hydraulic or pneumatic spraying methods in step (a).

19. Method as defined in one of the claims 17 or 18, **characterized in that** the coating material is applied to a pretreated substrate in step (a).

20. Component coated with a coating produced from a coating material as defined in any one of claims 1 to 15.

21. A component as defined in claim 20, **characterized in that** it is a component of a construction or agricultural machine, preferably a body part or a tool part.

## Revendications

1. Matériau de revêtement pour la production d'un revêtement contenant au moins
- 10 à 70 % en poids d'un ou de plusieurs composés acides CH A de la formule 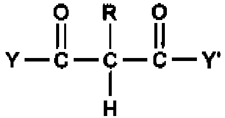 où
R représente l'hydrogène, un radical alkyle ou aryle,
Y représente un radical alkyle, aralkyle, aryle, alkoxy ou un groupe amino et,
Y' représente un radical alkyle, aralkyle, aryle, alkoxy ou un groupe amino,
- 4 à 40 % en poids d'un ou de plusieurs composés carbonyles vinylogues B étant choisis parmi les acrylates et/ou les maléates,
- 0,1 à 15 % en poids d'un ou de plusieurs catalyseurs basiques latents C,
- 0,00001 à 10 % en poids d'un ou de plusieurs stabilisants lumière étant choisis dans le groupe comprenant les capteurs de radicaux libres, les absorbants de la lumière UV, les quenchers et les agents décomposant les peroxydes,
- 0,00001 à 20 % en poids d'un ou de plusieurs agents prolongeant le temps ouvert étant choisis dans le groupe comprenant les composés basiques à fonction NH ayant une valeur de pKₐ entre 4 et 14,
- 0,00001 à 20 % en poids d'un ou de plusieurs agents prolongeant la durée de vie en pot étant choisis dans le groupe comprenant les alcools ayant jusqu'à 6 atomes de carbone et ayant un indice d'évaporation inférieur à 35,
- 0,00001 à 70 % en poids d'un ou de plusieurs pigments inorganiques et/ou organiques et
- 0,1 à 40 % en poids d'un ou de plusieurs agents anti-corrosion étant choisis dans le groupe comprenant les dérivés de tanin, les sulfonates basiques, les nitrocarboxylates, les sels de zinc d'acides nitriques organiques, les pigments anti-corrosion et les pigments actifs,
chaque quantité étant exprimée par rapport à la quantité totale du matériau de revêtement.

2. Matériau de revêtement selon la revendication 1, charactérisé en ce que les catalyseurs C sont des sels d'acides carboxyliques substitués de la formule 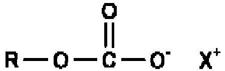 où
R représente l'hydrogène, un radical alkyle ou aralkyle ou un radical polymère,
X⁺ représente un cation de métal alcalin ou un cation de métal alcalino-terreux, un sel d'ammonium quaternaire ou un sel de phosphonium quaternaire de la formule (R')₄Y⁺, où
Y représente l'azote ou le phosphore,
R' est identique ou différent, est l'hydrogène, un radical alkyle, aryle ou aralkyle ou un polymère
et où R et R' forment une structure cyclique ou sont un polymère.

3. Matériau de revêtement selon l'une des revendications précédentes, charactérisé en ce que les stabilisants lumière sont des 2,2,6,6-tétraméthylpipéridines substituées, des 2-hydroxyphénylbenztriazoles, des 2-hydroxybenzophénones, des 2-hydroxyphényltriazines, des oxalanilides, des composés de nickel organiques, des thioéthers et/ou des phosphites.

4. Matériau de revêtement selon l'une des revendications précédentes, charactérisé en ce que le matériau de revêtement contient 0,5 à 5 % en poids, de préférence 1 à 3 % en poids, de stabilisants de lumière, chaque quantité étant exprimée par rapport à la quantité totale du matériau de revêtement.

5. Matériau de revêtement selon l'une des revendications précédentes, charactérisé en ce que les agents prolongeant la durée de vie en pot sont des alcools ayant jusqu'à 4 atomes de carbones.

6. Matériau de revêtement selon l'une des revendications précédentes, charactérisé en ce que le matériau de revêtement contient 0,01 à 15 % en poids d'agents prolongeant la durée de vie en pot, par rapport à la quantité totale du matériau de revêtement.

7. Matériau de revêtement selon l'une des revendicatons précédentes, charactérisé en ce que les agents prolongeant le temps ouvert sont des auccinimides, des 1,2,4,-triazoles, des 1,2,3,-benzotriazoles, des 5,5-diphénylhydantoines, des hydantoines et/ou une (RS)-3-éthyl-3-méthylpyrrolidine-2,5-dione.

8. Matériau de revêtement selon l'une des revendications précédentes, charactérisé en ce que le matériau de revêtement contient 0,01 à 10 % en poids d'agents prolongeant le temps ouvert par rapport à la quantité totale du matériau de revêtement.

9. Matériau de revêtement selon l'une des revendications précédentes, charactérisé en ce que les pigments sont choisis dans le groupe comprenant le dioxyde de titane, les oxydes de fer, les oxydes de chrome, les titanates de chrome, le vanadate de bismuth, le bleu de cobalt, les noirs de carbone, le Pigment Yellow 151, le Pigment Yellow 213, le Pigment Yellow 83, le Pigment Orange 67, le Pigment Orange 62, le Pigment Orange 36, le Pigment Red 170, le Pigment Violet 19, le Pigment Violet 23, le Pigment Blue 15:3, le Pigment Blue 15:6 et le Pigment Green 7.

10. Matériau de revêtment selon l'une des revendications précédentes, charactérisé en ce que les agents anti-corrosion sont des aminocarboxylates, un nitroisophtalate de zinc, des sels de zinc de l'acide cyanurique, du mica de fer, des pigments d'aluminium, du talc, des phosphates, des borates, des silicates, des molybdates et/ou des chromates.

11. Matériau de revêtement selon l'une des revendications précédentes, charactérisé en ce que le matériau de revêtement contient 1 à 35 % en poids d'agents anti-corrosion par rapport à la quantité totale du matériau de revêtement.

12. Matériau de revêtement selon l'une des revendications précédentes, charactérisé en ce que le matériau de revêtement contient en outre jusqu'à 25 % en poids d'un ou de plusieurs additifs de dispersion.

13. Matériau de revêtement selon l'une des revendications précédentes, charactérisé en ce que le matériau de revêtement contient en outre jusqu'à 60 % en poids d'un ou de plusieurs matières de charge.

14. Matériau de revêtement selon l'une des revendications précédentes, charactérisé en ce que le matériau de revêtement contient en outre jusqu'à 50 % en poids d'un ou de plusieurs solvants aprotiques.

15. Matériau de revêtement selon l'une des revendications précédentes, charactérisé en ce que le matériau de revêtement contient en outre jusqu'à 10 % en poids d'un ou de plusieurs agents de matage.

16. Utilisation du matériau de revêtement selon l'une quelconque des revendications 1 à 15 pour la production d'un système de revêtement monocouche.

17. Procédé pour le revêtement d'un composant comprenant les étapes suivantes: (a) application d'un matériau de revêtement selon l'une quelconque des revendications 1 à 15 sur un substrat et (b) durcissement de la couche appliquée à une température comprise entre 5 et 50 °C pour une durée de 0,5 à 12 heures.

18. Procédé selon la revendication 17, charactérisé en ce que le matériau de revêtement est appliqué par procédé de pulvérisation hydraulique ou pneumatique dans l'étape (a).

19. Procédé selon l'une des revendications 17 ou 18, charactérisé en ce que le matériau de revêtement est appliqué sur un substrat prétraité dans l'étape (a).

20. Composant revêtu d'un revêtement produit d'un matériau de revêtement selon l'une quelconque des revendications 1 à 15.

21. Composant selon la revendication 17, charactérisé en ce que le composant est un composant d'une machine de chantier ou machine agricole, de préférence un élément de carrosserie ou un élément d'outil.
